(19) Europäisches Patentamt / European Patent Office / Office européen des brevets

(11) **EP 2 599 908 B1**

(12) **EUROPEAN PATENT SPECIFICATION**

(45) Date of publication and mention of the grant of the patent:
**04.03.2015 Bulletin 2015/10**

(21) Application number: **11812098.9**

(22) Date of filing: **29.07.2011**

(51) Int Cl.:
*D04H 3/16* *(2006.01)*    *B01D 39/16* *(2006.01)*
*D01D 5/08* *(2006.01)*    *D01D 10/00* *(2006.01)*
*D01F 6/06* *(2006.01)*    *B01D 39/04* *(2006.01)*
*D01D 5/00* *(2006.01)*    *D04H 3/007* *(2012.01)*
*D01D 5/098* *(2006.01)*    *D01D 5/084* *(2006.01)*

(86) International application number:
**PCT/JP2011/004338**

(87) International publication number:
**WO 2012/014501 (02.02.2012 Gazette 2012/05)**

(54) **NON-WOVEN FIBER FABRIC, AND PRODUCTION METHOD AND PRODUCTION DEVICE THEREFOR**

VLIESSTOFF UND HERSTELLUNGSVERFAHREN UND HERSTELLUNGSVORRICHTUNG DAFÜR

TISSU NON TISSÉ, PROCÉDÉ ET DISPOSITIF POUR SA PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2010 JP 2010170660**

(43) Date of publication of application:
**05.06.2013 Bulletin 2013/23**

(73) Proprietor: **Mitsui Chemicals, Inc.**
**Tokyo 105-7117 (JP)**

(72) Inventors:
• **MATSUBARA, Akio**
 **Chiba 299-0265 (JP)**
• **NAKAMURA, Kenichi**
 **Tokyo 105-7117 (JP)**

(74) Representative: **Hoffmann Eitle**
**Patent- und Rechtsanwälte PartmbB**
**Arabellastraße 30**
**81925 München (DE)**

(56) References cited:
**WO-A1-2007/022389    WO-A1-2010/027063**
**WO-A1-2010/027063    WO-A2-2011/100743**
**JP-A- 6 171 003      JP-A- 2007 262 644**
**JP-A- 2007 262 644    JP-A- 2008 525 670**
**JP-A- 2009 275 339    JP-A- 2009 275 339**
**JP-A- 2009 534 548    JP-A- 2010 285 720**
**JP-A- 2010 513 744    JP-A- 2010 522 835**
**JP-A- 2011 089 240    US-A1- 2006 049 542**

**Description**

Technical Field

The present invention relates to a nonwoven fiber fabric, and a method and an apparatus for manufacturing the same.

Background Art

As the fiber diameter of fibers constituting a nonwoven fiber fabric decreases, the nonwoven fiber fabric becomes excellent in various properties, such as separation performance, liquid retention function, wiping performance, concealment performance, and flexibility. Therefore, many methods for manufacturing a nonwoven fiber fabric having a small fiber diameter have conventionally been proposed.

Methods for manufacturing a nonwoven fiber fabric include methods for spinning from polymer solutions containing solvent, and methods for spinning molten polymers. Among the methods for spinning from polymer solutions, the spinning methods that involve fiber diameter reduction include flash spinning and electrostatic spinning. With the methods for spinning from a polymer solution, fibers can be thinned, but recovery and treatment of the solvent included in the fibers is necessary after spinning, and therefore the process becomes complicated. Further, the solvent cannot be completely removed, resulting in the fibers containing a certain amount of solvent.

On the other hand, among the methods for spinning molten polymers, the spinning methods that involve fiber diameter reduction include melt blow spinning, and a spinning method combining melt blow spinning and electrostatic spinning. The methods for spinning molten polymers do not require dissolution of polymers into solvents, and therefore, the process is simple, but these methods suffer from a limitation in the thinness of the resultant fibers. In addition, methods for thinning fibers include methods using splittable fibers, but the step of splitting fibers is necessary.

As one example of spinning from a polymer solution containing a solvent, a method is proposed in which a solution of polymers dissolved in solvent is carried to nozzles, and while the polymer solution is discharged from the nozzles to which a high voltage is applied, compressed air is jetted around the openings of the nozzles, and spun polymers are collected on a grounded air intake collector disposed under the nozzles (see Patent Literature 1).

Patent Literature 1 also discloses flash spinning, electrostatic spinning (electrospinning), and melt blow spinning as methods for manufacturing nonwoven fiber fabrics. Further, Patent Literature 1 discloses a method of integrally combining melt blow spinning and electrostatic spinning.

Method for thinning fibers are proposed that involve jetting a solution containing polymeric materials through electrically charged nozzles so that the polymer materials to be discharged are either positively or negatively charged (see Patent Literature 2).

As an example of spinning a molten polymer, a method for thinning fibers by allowing a fluid flow to act on a nonwoven fabric including splittable composite fibers including two or more thermoplastic resin components to split the splittable composite fibers (see Patent Literature 3) is reported.

In addition, as an exemplary method for spinning molten polymers, technology has been reported in which thinning of a molten resin is facilitated by simultaneously performing melt blowing and voltage application during melt blow spinning (see Patent Literature 4).

WO 2010/027063 A1 relates to a fiber assembly obtained using an electrospinning method, a composite of an electro conductive substrate and such a fiber assembly, and production method thereof. According to a method described therein, a fibrous mass is obtained by applying a voltage between a feeding-side electrode and a receiving-side electrode to give charges to a resin in a molten state, electro-spinning the charged resin to thereby elongate the resin and obtain an ultrafine composite fiber, and stacking the ultrafine fiber. The ultrafine composite fiber comprises a composite fiber which is constituted of at least two polymers and is of at least one type selected from the sea-island type and the core-sheath type, in terms of type determined from fiber section. At least one component selected from the island component and the core component has a volume resistivity of $10^{15}$ Ω·cm or lower, and at least one component selected from the sea component and the sheath component has a volume resistivity exceeding $10^{15}$ Ω·cm. The ultrafine composite fiber is obtained through electro-spinning without using water or a solvent as a spinning dope. The ultrafine composite fiber is stacked to obtain the fibrous mass.

WO 2007/022389 A1 relates to a fiber spinning apparatus for charging a polymer-containing liquid stream, having at least one electrically charged, point-electrode positioned adjacent the intended path of said liquid stream and creating an ion flow by corona discharge to impart electrical charge to the polymer-containing liquid stream.

WO 2011/100743 A2 relates to a process and apparatus for the production of nanofibers, wherein the nanofibers are produced by a process utilizing a gas, and the apparatus is specifically adapted to deliver fiber-forming material to a gas stream and thereby initiate the formation of nanofibers.

Citation List

Patent Literature

PTL 1: Japanese Unexamined Patent Application Publication (Translation of PCT application) No. 2005-520068.
PTL 2: Japanese Patent Application Laid-Open No. 2002-201559.
PTL 3: Japanese Patent Application Laid-Open No. 8-273654.
PTL 4: Japanese Patent Application Laid-Open No. 2007-262644.

Summary of Invention

Technical Problem

A nonwoven fabric of ultrathin fibers (fiber diameter: 0.5 $\mu$m or less), free from any solvent component and/or impurities such as resin components (e.g., adhesive) other than the resin constituting the fibers, has not been provided so far. As the fibers of a nonwoven fabric become thinner, for example, its filter efficiency increases. However,, if the nonwoven fabric contains a solvent component and/or impurities, it may not be used as a (liquid) filter in fields where a high level of contamination prevention is required, such as in the semiconductor industry. Therefore, the present invention provides a nonwoven fabric of ultrathin fibers that is free from any solvent component and/or impurities.
The present invention also provides a method for manufacturing a nonwoven fabric of ultrathin fibers by means of a method for spinning molten polymers. In other words, the present invention provides a method for manufacturing a nonwoven fabric having an extremely small fiber diameter without using a method for spinning from polymer solutions. Further, the present invention provides an apparatus for implementing the method.

Solution to Problem

The present invention has been made focusing on melt blowing, one of the methods for spinning molten polymers. As described above, in the process of melt blowing, fibers are thinned by pulling, by means of a high temperature gas, a fibrous resin discharged from a spinneret; however, it has been found that melt blowing suffers a limitation in the fiber thinning capability - fibers can only be thinned to a minimum diameter of about 0.8 $\mu$m. The present inventors therefore have studied to achieve further thinning of fibrous resins.
Specifically, the present invention relates to the following:

[1] A nonwoven fiber fabric including thermoplastic resin fibers, wherein
the fibers have an average fiber diameter in the range of 0.01 to 0.5 $\mu$m, and
the nonwoven fiber fabric has an average pore diameter in the range of 0.01 to 10.0 $\mu$m and is free from any solvent component.
[2] The nonwoven fiber fabric according to [1], wherein the fibers are melt-spun by melt blowing.
[3] The nonwoven fiber fabric according to [1] or [2], wherein the nonwoven fiber fabric has entanglement points at which the fibers of the nonwoven fiber fabric are self-fused to each other.
[4] The nonwoven fiber fabric according to any one of [1] to [3], wherein the nonwoven fiber fabric has a void ratio of 40% or more.
[5] The nonwoven fiber fabric according to any one of [1] to [4], wherein the thermoplastic resin is an olefin thermoplastic resin.
[6] The nonwoven fiber fabric according to [5], wherein the olefin thermoplastic resin is a propylene polymer.
[7] A laminate including one or more layers that comprise the nonwoven fiber fabric according to any one of [1] to [6].
[8] The laminate according to [7], further including spunbonded nonwoven fabrics laminated on both sides of the layer comprising the nonwoven fiber fabric.
[9] A filter including the laminate according to [7] or [8].
[10] An air filter including the laminate according to [7] or [8].
[11] A foam molding reinforcement including the laminate according to [7] or [8].
[12] A method for manufacturing a nonwoven fiber fabric, including:

discharging a molten thermoplastic resin from a spinneret together with a heated gas by melt blowing, to provide a fibrous resin having a diameter of 1.0 $\mu$m or less;

applying a high voltage to the fibrous resin after the discharging and providing; and

collecting the fibrous resin to which the high voltage has been applied, in the form of a web.

[13] The method for manufacturing a nonwoven fiber fabric according to [12], wherein fibers of the nonwoven fiber fabric have an average fiber diameter in the range of 0.01 to 0.5 $\mu$m.

[14] The method for manufacturing a nonwoven fiber fabric according to [12] or [13], further including irradiating the fibrous resin discharged from the spinneret with heat rays before or simultaneously with the step of applying a high voltage.

[15] The method for manufacturing a nonwoven fiber fabric according to [14], wherein the heat rays are near-infrared rays.

[16] The method for manufacturing a nonwoven fiber fabric according to any one of [12] to [15], wherein h the thermoplastic resin is an olefin thermoplastic resin.

[17] A method for manufacturing a nonwoven fiber fabric, including:

discharging a molten thermoplastic resin from a spinneret, together with a heated gas discharged from a gas nozzle by melt blowing, to provide a fibrous resin;

applying a high voltage to the fibrous resin; and

collecting the fibrous resin to which the high voltage has been applied, in the form of a web on a collector, wherein applying the high voltage is a step of providing a potential difference between the collector and a conductive member placed between the gas nozzle and the collector.

[18] An apparatus for manufacturing a nonwoven fiber fabric, including:

an extruder that melts and carries a thermoplastic resin;

a spinneret that discharges the molten resin carried from the extruder, in the form of fibers;

a gas nozzle that jets a high temperature gas to a lower part of the spinneret;

a voltage application section that applies a high voltage to the fibrous resin discharged from the spinneret; and

a collector section that collects the fibrous resin in the form of a web, wherein

the voltage application section applies a high voltage to the fibrous resin after the fibrous resin discharged from the spinneret becomes 1.0 $\mu$m or less.

[19] An apparatus for manufacturing a nonwoven fiber fabric, including:

an extruder that melts and carries a thermoplastic resin;

a spinneret that discharges the molten resin carried from the extruder, in the form of fibers;

a gas nozzle that jets a high temperature gas to a lower part of the spinneret;

a voltage application section that applies a high voltage to the fibrous resin discharged from the spinneret; and

a collector section that collects the fibrous resin in the form of a web, wherein

the voltage applying section comprises a conductive member placed between the gas nozzle and the section that collects the fibrous resin in the form of a web.

[20] The apparatus for manufacturing a nonwoven fiber fabric according to [19], wherein the voltage application section provides a potential difference between the conductive member and the section that collects the fibrous resin in the form of a web, to apply a high voltage to the fibrous resin.

[21] The apparatus for manufacturing a nonwoven fiber fabric according to [19] or [20], wherein the conductive member is placed between the gas nozzle and the section that collects the fibrous resin in the form of a web, and at a position 10 mm or more away from a surface of the gas nozzle.

[22] The apparatus for manufacturing a nonwoven fiber fabric according to [19] or [20], wherein the conductive member is placed between the gas nozzle and the section that collects the fibrous resin in the form of a web, and at a position 10 to 20 mm from a surface of the gas nozzle.

[23] The apparatus for manufacturing a nonwoven fiber fabric according to [18] to [22], further including a heat ray irradiation section that irradiates the fibrous resin discharged from the spinneret with heat rays.

Advantageous Effects of Invention

The nonwoven fiber fabric of the present invention has an extremely small fiber diameter although it is free from any solvent component and/or impurities such as resin components other than the resin constituting the fibers.

Moreover, the nonwoven fiber fabric of the present invention can be manufactured by improving the conventional melt blowing, and therefore can be manufactured in a simple flow.

Brief Description of Drawings

Fig. 1 is an electron micrograph of a nonwoven fiber fabric of the present invention, showing entanglement points at which fibers are self-fused to each other;
Fig. 2 is a schematic view of the first example of an apparatus for manufacturing an ultrathin nonwoven fiber fabric according to the present invention;
Fig. 3 is a schematic view of the second example of the apparatus for manufacturing an ultrathin nonwoven fiber fabric according to the present invention;
Fig. 4 is a schematic view of the third example of the apparatus for manufacturing an ultrathin nonwoven fiber fabric according to the present invention; and
Fig. 5 is a schematic view of the fourth example of the apparatus for manufacturing an ultrathin nonwoven fiber fabric according to the present invention.

Description of Embodiments

1. Nonwoven Fiber Fabric

The fibers of the nonwoven fiber fabric of the present invention include a thermoplastic resin, preferably include a nonpolar thermoplastic resin, more preferably include a nonpolar olefin thermoplastic resin, and further preferably include a polypropylene resin.

The thermoplastic resin constituting the fibers of the nonwoven fiber fabric of the present invention can be various publicly known thermoplastic resins. Specific examples of such a thermoplastic resin include homopolymers or copolymers of $\alpha$-olefins, such as ethylene, propylene, 1-butene, 1-hexene, 4-methyl-1-pentene, and 1-octene, more specifically, polyolefins, such as high pressure low density polyethylene, linear low density polyethylene (so-called LLDPE), high density polyethylene, polypropylene (propylene homopolymer), polypropylene random copolymers, poly(1-butene), poly(4-methyl-1-pentene), ethylene-propylene random copolymers, ethylene-1-butene random copolymers, and propylene-1-butene random copolymers.

As other specific examples of the thermoplastic resin, polyesters (polyethylene terephthalate, polybutylene terephthalate, polyethylene naphthalate, and the like), polyamides (e.g., nylon-6, nylon-66, poly(meta-xylene adipamide)), polyvinyl chloride, polyimides, ethylene-vinyl acetate copolymers, polyacrylonitrile, polycarbonates, polystyrene, ionomers, or mixtures thereof can be illustrated.

Among these thermoplastic resins, high pressure low density polyethylene, linear low density polyethylene (LLDPE), high density polyethylene, propylene polymers, such as polypropylene and polypropylene random copolymers, polyethylene terephthalate, polyamides, and the like are preferred.

Among the above thermoplastic resins, propylene polymers are preferred because nonwoven fabrics including fibers of propylene polymers have excellent chemical resistance. A preferred propylene polymer has a melting point (Tm) of 155°C or more, preferably in the range of 157 to 165°C, and may be a homopolymer of propylene, or a copolymer of propylene and a very small amount of one or two or more $\alpha$-olefins. The $\alpha$-olefins to be copolymerized are preferably one or two or more $\alpha$-olefins having 2 or more, preferably 2 to 8 carbon atoms, and more specifically include ethylene, 1-butene, 1-pentene, 1-hexene, 1-octene, and 4-methyl-1-pentene. Propylene polymers are particularly preferably propylene homopolymers.

The melt flow rate (MFR: ASTM D-1238, 230°C, load 2160 g) of propylene polymers is not particularly limited as long as they can be melt-spun. The melt flow rate is generally in the range of 500 to 3000 g/10 min, preferably 1000 to 2500 g/10 min. Propylene polymers having an MFR in the above range offer good spinnability and provide nonwoven fabrics that have good mechanical strength, such as tensile strength.

The main features of the nonwoven fiber fabric of the present invention are as follows: 1) the average fiber diameter of the nonwoven fabric fibers is small; 2) the average pore diameter of pores formed by the nonwoven fabric is small; and 3) the nonwoven fiber fabric includes no solvent component.

The average fiber diameter of the fibers constituting the nonwoven fiber fabric is 0.01 to 0.5 $\mu$m, preferably 0.1 to 0.3 $\mu$m. The lower limit of the average fiber diameter of a nonwoven fiber fabric manufactured by a conventional melt blowing method is about 0.8 $\mu$m, and the fibers of the nonwoven fiber fabric of the present invention are characterized by being thinner. The average fiber diameter of a nonwoven fiber fabric may be measured as follows: any 1,000 nonwoven fabric fibers are chosen in an electron micrograph (magnification: 1,000x) of a nonwoven fiber fabric, the diameter of the selected fibers is measured, and an average of the diameters is calculated.

The average pore diameter of the pores of the nonwoven fiber fabric as measured at a basis weight of 10 g/m$^2$ is 10.0 $\mu$m or less, preferably 3.0 $\mu$m or less, and more preferably 2.5 $\mu$m or less. On the other hand, it is preferred that the average pore diameter of the pores of the nonwoven fiber fabric as measured at a basis weight of 10 g/m$^2$ is 0.01 $\mu$m or more, preferably 0.1 $\mu$m or more. When the average pore diameter is less than 0.01 $\mu$m, there is concern that the pressure loss increases and the flow rate decreases when the nonwoven fiber fabric is used for a filter.

In addition, the maximum pore diameter of the pores of the nonwoven fiber fabric being a single layer basis weight of 10 g/m$^2$ is preferably 20 $\mu$m or less, more preferably 6.0 $\mu$m or less, and further preferably 5.0 $\mu$m or less, and the minimum pore diameter of the pores of the nonwoven fiber fabric as measured at a basis weight of 10 g/m$^2$ is preferably 0.01 $\mu$m or more, more preferably 0.1 $\mu$m or more.

The diameters (average pore diameter, maximum pore diameter, and minimum pore diameter) of the pores of the nonwoven fiber fabric can be measured by a bubble point method. Specifically, it is recommended that a test piece of the nonwoven fiber fabric is impregnated with a fluorine inert liquid, and the pore diameters are measured by a capillary flow porometer.

The basis weight of the nonwoven fiber fabric of the present invention can be appropriately determined by the use, and is generally in the range of 1 to 200 g/m$^2$, preferably 2 to 150 g/m$^2$. The void ratio of the nonwoven fiber fabric is generally 40% or more, preferably in the range of 40 to 98%, more preferably in the range of 60 to 95%. When the nonwoven fiber fabric of the present invention is embossed, the void ratio of the nonwoven fiber fabric means a void ratio of a region excluding embossed points.

In addition, portions having a void ratio of 40% or more preferably occupy 90% or more of the volume of the nonwoven fiber fabric of the present invention, and more preferably occupy substantially 100% of the volume of the nonwoven fiber fabric of the present invention. When the nonwoven fiber fabric of the present invention is used for a filter, it is preferable that the nonwoven fiber fabric is not embossed, or is not embossed in almost all of the regions. This is because when the nonwoven fiber fabric is embossed, a pressure loss when the nonwoven fiber fabric as a filter allows a fluid to pass therethrough increases, and the filter flow path length decreases, resulting in poor filtering performance. On the other hand, when the nonwoven fiber fabric of the present invention is laminated on a second nonwoven fabric, the second nonwoven fabric may be embossed.

The nonwoven fiber fabric of the present invention is characterized by including no solvent component. The solvent component means an organic solvent component capable of dissolving the resin constituting the fibers. The solvent component is assumed to be dimethylformamide (DMF) or the like. By "free from any solvent component" is meant that solvent levels are below the detection limit as measured by head space gas chromatography.

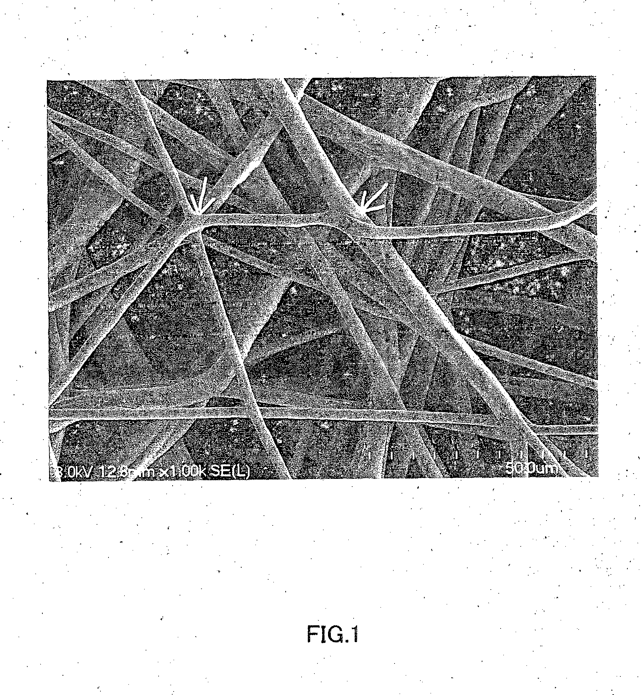

The fibers of the nonwoven fiber fabric of the present invention have entanglement points at which the fibers are self-fused to each other. The entanglement points at which the fibers are self-fused to each other mean branched sites at which the fibers are bonded to each other by self-fusing of resin that constitutes the fibers, and are distinguished from entanglement points formed by adhering fibers to each other via a binder resin. Fig. 1 is an electron micrograph (2,000x) of the nonwoven fiber fabric of the present invention. Portions indicated by arrows in Fig. 1 are entanglement points at which the fibers are self-fused to each other. The entanglement points at which the fibers are self-fused to each other are formed in the process of thinning of the fiber resin by melt blowing.

As described above, the fibers of the nonwoven fiber fabric of the present invention have entanglement points formed by self-fusion, and therefore, do not require an adhesion component for adhering the fibers to each other. Therefore, the nonwoven fiber fabric of the present invention need not, and preferably does not, contain a resin component other than the resin constituting the fibers.

The nonwoven fiber fabric of the present invention may be used as a single-layer nonwoven fabric, or may be used as a nonwoven fabric constituting at least one layer of a laminate. Examples of other layers constituting the laminated nonwoven fabric include other nonwoven fabrics, such as conventional melt blown nonwoven fabrics, spunbonded nonwoven fabrics, and needle punched and spunlaced nonwoven fabrics, woven fabrics, knitted fabrics, and paper.

The nonwoven fiber fabric of the present invention can be used, for example, as filters, such as gas filters (air filters) and liquid filters. As described above, the nonwoven fiber fabric of the present invention 1) is free from any solvent component, 2) is free from any adhesive component for bonding the fibers to each other, and 3) need not be embossed; therefore, the nonwoven fiber is substantially free from impurities other than the resin component constituting the nonwoven fabric fibers. Therefore, the nonwoven fiber fabric of the present invention has high cleanliness and filtering performance, and is preferably used as a high performance filter.

In addition, the nonwoven fiber fabric of the present invention can also be used as a foam molding reinforcement. The foam molding reinforcement is a reinforcing material used, for example, to cover the surface of a foam product including urethane or the like to protect the surface of the foam or increase the rigidity of the foam product.

As described above, the nonwoven fiber fabric of the present invention has a small fiber diameter and high liquid retention performance and the like. Therefore, by performing mold foaming with a foam molding reinforcement, which includes the nonwoven fiber fabric of the present invention, being placed on the inner surface of a foaming mold, it is possible to prevent a foaming resin such as urethane from bleeding on the foam product surface. For the foam molding reinforcement, a single-layer nonwoven fabric including only the nonwoven fiber fabric of the present invention may be used, but a laminate in which a spunbonded nonwoven fabric is laminated on one surface or both surfaces of the nonwoven fiber fabric of the present invention is preferably used. By laminating the spunbonded nonwoven fabric, for example, lamination with other layers becomes easy.

As the above spunbonded nonwoven fabric, a spunbonded nonwoven fabric having a fiber diameter of 10 to 40 $\mu$m, preferably 10 to 20 $\mu$m, and a basis weight of 10 to 50 g/m$^2$, preferably 10 to 20 g/m$^2$, is preferred. When the fiber diameter and basis weight of the spunbonded nonwoven fabric layer is in the above range, the bleeding of a foaming resin can be prevented, and the weight reduction of the foam molding reinforcement is promoted.

The above foam molding reinforcement may further have a reinforcing layer and the like on the spunbonded nonwoven fabric, as required. As the reinforcing layer, various publicly known nonwoven fabrics and the like can be used. When the foam molding reinforcement has the reinforcing layer only on one surface, the foam molding reinforcement is disposed so that the reinforcing layer is closer to a foaming resin than the nonwoven fiber fabric of the present invention is.

2. Method for Manufacturing Nonwoven Fiber Fabric

A method for manufacturing a nonwoven fiber fabric according to the present invention is characterized by including, for example, the following steps:

1) the step of discharging a molten thermoplastic resin from a spinneret together with a heated gas by a melt blowing method to provide a fibrous resin
2) the step of applying a high voltage to the above fibrous resin after the discharging and providing
3) the step of collecting the above fibrous resin to which the high voltage has been applied, in the form of a web.

In a method for manufacturing an ultrathin nonwoven fiber fabric according to the present invention, an ultrathin nonwoven fiber fabric is manufactured by melt-spinning a thermoplastic resin, rather than using a solution of a thermoplastic resin as a spinning raw material. The thermoplastic resin used is as described above, and preferably includes a nonpolar thermoplastic resin, more preferably includes a nonpolar olefin thermoplastic resin, and further preferably includes a polypropylene resin.

The method for manufacturing a nonwoven fiber fabric according to the present invention is characterized by thinning a molten thermoplastic resin to a certain diameter by melt blowing, and then applying a high voltage to further thin the thermoplastic resin by an electric field. Thus, the method for manufacturing a nonwoven fiber fabric according to the present invention is characterized by performing fiber thinning in two stages - melt blowing, and voltage application.

Melt blowing is one of the fleece forming methods employed in the manufacture of nonwoven fiber fabrics. When a molten thermoplastic resin is discharged in the form of fibers from a spinneret, a heated compressed gas is applied to the discharged molten material from both side surfaces, and the discharged material is accompanied by the heated compressed gas, and thus, the diameter of the discharged material can be reduced.

Specifically, melt blowing involves, for example, melting a thermoplastic resin (e.g., polypropylene resin), a raw material, using an extruder or the like. The molten resin is then introduced into a spinneret connected to the tip of the extruder, and discharged in the form of fibers from the spinning nozzles of the spinneret. The discharged fibrous molten resin is pulled by a high temperature gas (e.g., air), whereby the fibrous molten resin is thinned.

The discharged fibrous molten resin is generally thinned to a diameter of 1.0 $\mu$m or less, preferably 0.8 $\mu$m or less, by being pulled by the high temperature gas. Preferably, the fibrous molten resin is thinned to the limit of thinning by the high temperature gas. When the diameter of the fibers thinned by the high temperature gas exceeds 1.0 $\mu$m, further thinning may not occur even when the high voltage applying step is subsequently performed.

The fibrous molten resin thinned by being pulled by the high temperature gas is further thinned by applying a high voltage thereto. In other words, the fibrous molten resin is thinned by pulling it to the collection side by the attraction induced by an electric field. The applied voltage is not particularly limited, and can be 1 to 300 kV.

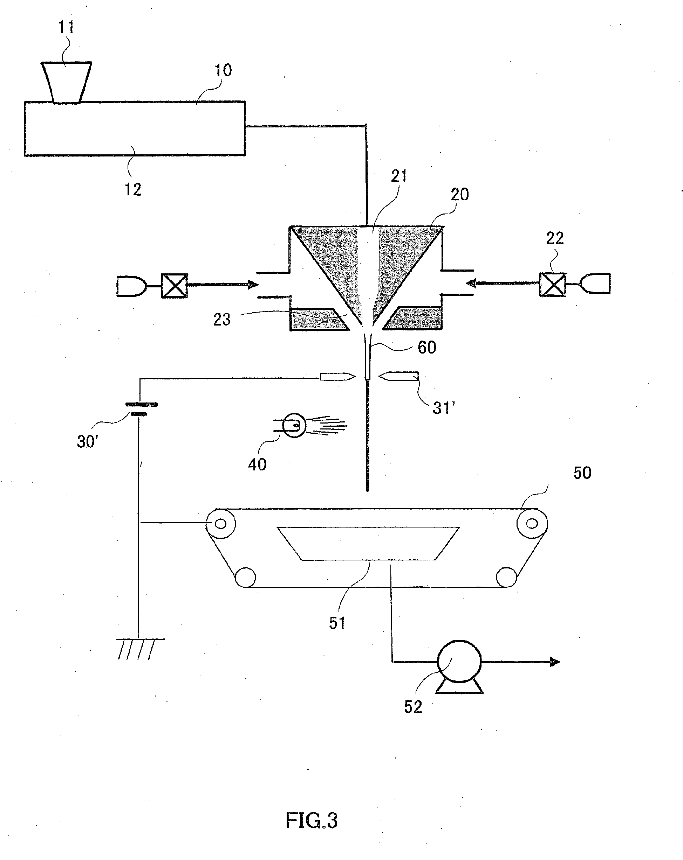

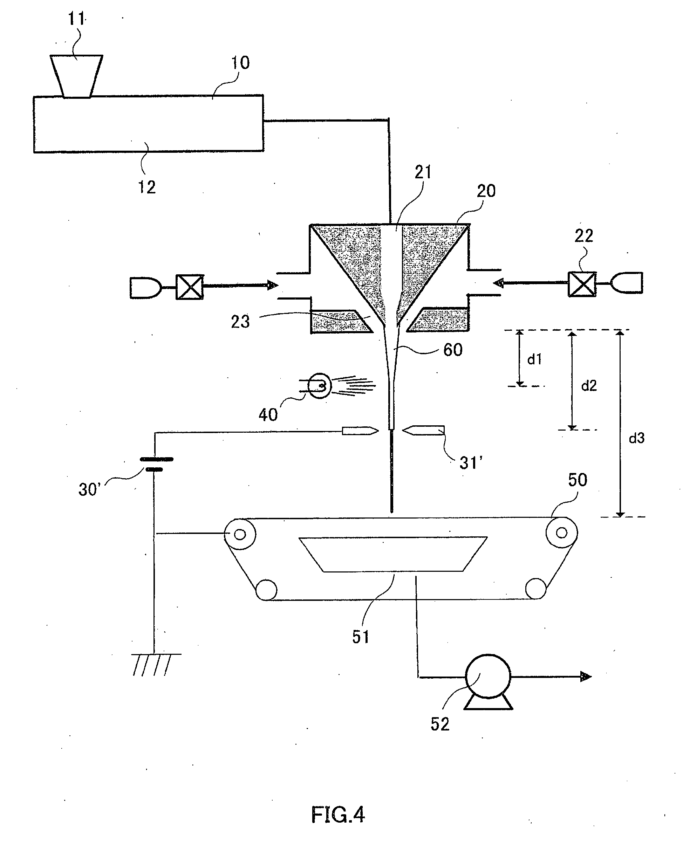

The application of a voltage to the fibrous molten resin can be performed by providing a potential difference between a collector for collecting the fibrous resin and a conductive member placed between a gas nozzle for discharging the above high temperature gas and the collector, or the like (see, e.g., Fig. 3 and Fig. 4). By applying a voltage at the above position after melt blowing, the fibrous molten resin is sufficiently thinned.

Thinning of a fibrous molten resin by an electrostatic force (i.e., electrospinning) has conventionally been attempted, but the extent of the thinning has not been sufficient. In addition, as described in Japanese Patent Application Laid-Open No. 2007-262644, it is reported that with a polar resin (e.g., polyethylene terephthalate), the fibrous molten resin can be thinned to some extent by an electrostatic force. However, in the case of a nonpolar resin, it has been very difficult to thin the fibrous molten resin by an electrostatic force. The present inventors have found that even with a nonpolar resin, the fibrous molten resin can be further thinned by electrostatic force as long as it is previously sufficiently thinned.

The fibrous molten resin may be irradiated with heat rays. By irradiating with heat rays, the fibrous resin that is thinned and has decreased flowability can be remelted. In addition, by irradiating with heat rays, the melt viscosity of the fibrous molten resin can be further decreased. Therefore, even when a thermoplastic resin having a large molecular weight is used as a spinning raw material, sufficiently thinned fibers can be obtained, and a nonwoven fiber fabric having high strength can be obtained.

Heat rays mean electromagnetic waves having a wavelength of 0.7 to 1000 $\mu$m, particularly near-infrared rays having a wavelength of 0.7 $\mu$m to 2.5 $\mu$m. The intensity and dose of irradiation of the heat rays are not particularly limited, and it is only necessary that the fibrous molten resin is remelted. For example, a 1 V to 200 V (preferably 1 V to 20 V) near-infrared lamp or near-infrared heater can be used.

The order of the voltage application and heat ray irradiation is not particularly limited, and they may be simultaneously performed. Preferably, voltage application is preceded by irradiation with heat rays.

The fibrous molten resin subjected to voltage application is collected and deposited thereon. As a result, a nonwoven fiber fabric is manufactured. Examples of the collector include a porous belt or a porous drum. In addition, the collector may have an air collecting section and may promote the collection of the fibers.

The thinned fibers may be collected in the form of a web on the desired substrate previously provided on the collector. Examples of the previously provided substrate include other nonwoven fabrics, such as melt blown nonwoven fabrics, spunbonded nonwoven fabrics, and needle punched and spunlaced nonwoven fabrics, woven fabrics, knitted fabrics, and paper. Thus, an ultrathin nonwoven fiber fabric laminate used in high performance filters, wipers, and the like can also be obtained. Examples of the above substrate include other nonwoven fabrics, such as melt blown nonwoven fabrics, spunbonded nonwoven fabrics, and needle punched and spunlaced nonwoven fabrics, woven fabrics, knitted fabrics, and paper.

3. Apparatus for Manufacturing Nonwoven Fiber Fabric

An apparatus for manufacturing a nonwoven fiber fabric according to the present invention includes:

1) an extruder that melts and carries a thermoplastic resin;
2) a spinneret that discharges the molten resin carried from the above extruder, in the form of fibers;
3) a gas nozzle that jets a high temperature gas to the lower part of the above spinneret;
4) a voltage application section that applies a high voltage to the fibrous molten resin discharged from the above spinneret; and
5) a collector section that collects the above fibers in the form of a web.

The extruder is not particularly limited, and may be a single-screw extruder or a multiple-screw extruder. A solid resin introduced from a hopper is melted in the compression section.

The spinneret is disposed at the tip of the extruder. The spinneret generally includes a plurality of spinning nozzles, and, for example, a plurality of spinning nozzles is arranged in a row. The diameter of the spinning nozzle is preferably 0.05 to 0.38 mm. The molten resin is carried to the spinneret by the extruder, and introduced into the spinning nozzles. A fibrous molten resin is discharged through the openings of the spinning nozzles. The discharge pressure of the molten resin is generally in the range of 0.01 to 200 kg/cm$^2$, preferably in the range of 10 to 30 kg/cm$^2$. Thus, the discharge rate is increased to achieve mass production.

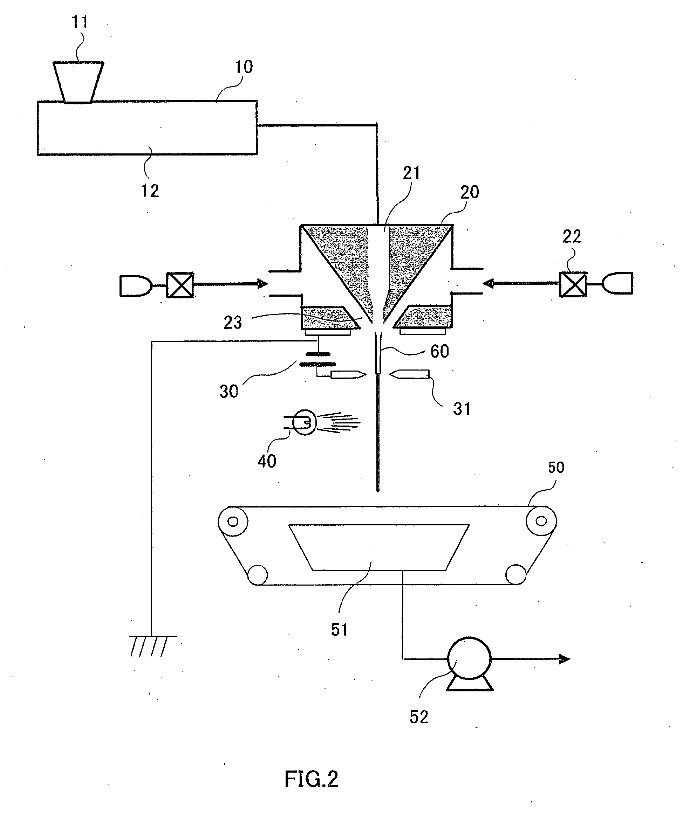

The gas nozzle jets a high temperature gas to the lower part of the spinneret, more specifically near the openings of the spinning nozzles. The jetted gas can be air. It is preferred to provide the gas nozzle in the vicinity of the openings of the spinning nozzles and jet a high temperature gas to the resin immediately after discharged through the nozzle openings, as shown in Fig. 2 and the like.

The speed of the jetted gas (discharge amount of gas) is not particularly limited, and can be 4 to 30 Nmm$^3$/min/m. The temperature of the jetted gas varies with the type of the raw material resin, and is generally 5°C to 400°C or less, preferably in the range of 250°C to 350°C, in the case of polypropylene. The type of the jetted gas is not limited by the type of the desired nonwoven fabric, and compressed air can be used.

The voltage application section applies a voltage to the fibrous molten resin discharged from the spinneret. The application of a voltage to the fibrous molten resin includes the following modes:

1) As shown in Fig. 2, ring-shaped conductive member 31 (e.g., a metal plate) is disposed between the openings of gas nozzles 23 and collector 50, and a potential difference is provided between ring-shaped conductive member 31 and the openings of gas nozzles 23. At this time, the openings of gas nozzles 23 may be grounded.
2) As shown in Fig. 3 to Fig. 5, ring-shaped conductive member 31' (e.g., a metal plate) is disposed between the openings of gas nozzles 23 and collector 50, and a potential difference is provided between ring-shaped conductive member 31' and collector 50. In this case, collector 50 may be grounded.

When the voltage application sections shown in Fig. 2 to Fig. 5 are used, the members to which a high voltage is applied, and the grounded members can be clearly separated from other members, and therefore, insulating each other can be easy. Further preferably, it is preferred to provide a potential difference between ring-shaped conductive member 31' and collector 50, as shown in Fig. 3 to Fig. 5.

The applied voltage is desirably in the range of 1 kV to 300 kV, more desirably 10 to 100 kV.

The voltage application section is disposed at a certain spacing from the discharge port of the spinneret. A certain spacing is a spacing for the fibrous molten resin discharged from the spinneret to be pulled by a high temperature gas and thinned to some extent. Being thinned to some extent means that the fibrous molten resin becomes thinned to a diameter of 1.0 $\mu$m or less, preferably 0.8 $\mu$m or less.

For the setting of the position where the voltage application section is disposed, first, the fibrous molten resin is discharged from the spinneret without applying a voltage, and changes in the diameter of the fibrous molten resin are measured. Based on the measurement results, the voltage application section is disposed so that a voltage can be applied to the fibrous molten resin thinned to a diameter of 1.0 $\mu$m or less. Generally, the voltage application section is preferably disposed at a position 10 mm or more away from the gas nozzle surface, and more preferably disposed at a position 10 to 20 mm from the gas nozzle surface.

It is preferred that the apparatus for manufacturing a nonwoven fiber fabric according to the present invention further includes a heat ray irradiation section that irradiates the fibrous molten resin discharged from the above spinneret with heat rays. It is preferred that the fibers irradiated with heat rays is remelted to increase flowability. The heat ray irradiation section is, for example, near-infrared rays.

The irradiation of the fibers with heat rays may be performed while a voltage is applied to the fibers (see Fig. 3), or before a voltage is applied to the fibers (Fig. 4). Heat ray irradiation is preferably performed before voltage application or simultaneously with voltage application, and more preferably performed before voltage application.

The collector section that collects the fibers in the form of a web (i.e., collector) is not particularly limited, and, for example, the fibers may be collected on a porous belt. The mesh width of the porous belt is preferably 5 to 200 mesh. Further, an air collecting section may be provided on the back side of the fiber collecting surface of the porous belt to make collection easy.

The distance from the collecting surface of the collecting section to the nozzle openings of the spinning nozzles is preferably 3 to 55 cm. The application of a voltage, and irradiation with heat rays as required, are performed between the nozzle openings and the collecting surface.

Examples of the apparatus for manufacturing a nonwoven fiber fabric and the method for manufacturing the same according to the present invention will be described below with reference to Fig. 2 to Fig. 5, but the present invention is not limited to these aspects. The apparatuses shown in Fig. 2 to Fig. 5 each has a voltage application section.

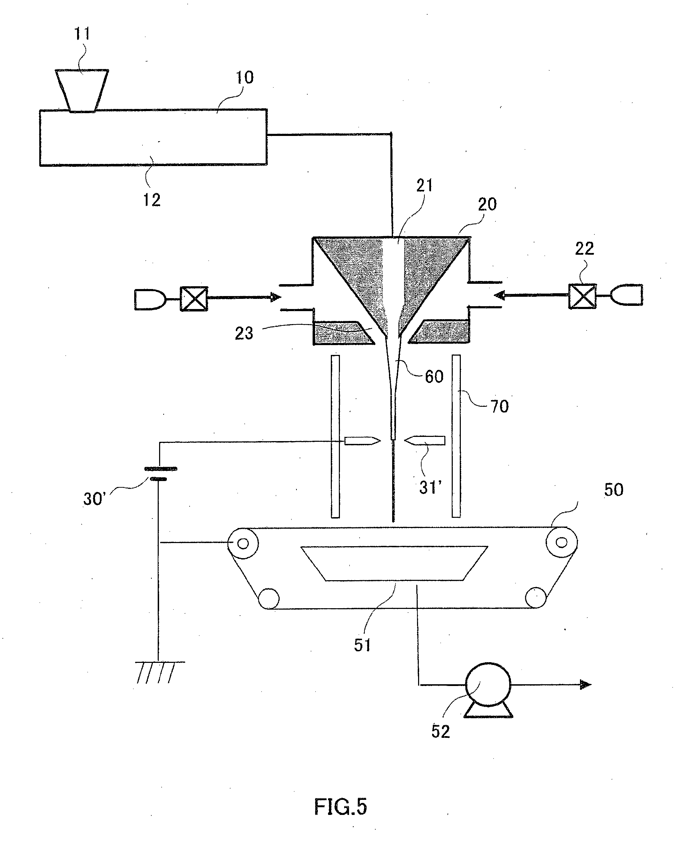

The apparatuses for manufacturing a nonwoven fiber fabric shown in Fig. 2 to Fig. 4 include extruder 10, spinneret 20, voltage power supply 30 or 30', near-infrared lamp 40, and porous belt (collector) 50. The apparatus for manufacturing a nonwoven fiber fabric shown in Fig. 5 includes extruder 10, spinneret 20, voltage power supply 30', temperature maintaining section 70, and porous belt (collector) 50.

A solid thermoplastic resin is introduced into hopper 11 of extruder 10, and melted in compression section 12. The molten resin is carried to spinneret 20, and introduced into spinning nozzles 21. The molten resin is discharged in the form of fibers through the nozzle openings of spinning nozzles 21.

On the other hand, air nozzles (gas nozzles) 23 are disposed in the vicinity of the nozzle openings of spinning nozzles 21. High temperature air fed from air heating apparatuses 22 is discharged from air nozzles 23. The discharged high temperature air is applied to resin 60 discharged from the nozzle openings of spinning nozzles 21.

Next, a voltage is applied to resin 60 discharged in the form of fibers, and resin 60 is also irradiated with heat rays. Each of the apparatuses shown in Fig. 2 to Fig. 4 will now be described.

In the apparatus shown in Fig. 2, ring-shaped conductive member 31 is disposed between spinneret 20 and porous belt 50. Voltage power supply 30 provides a high potential difference between ring-shaped conductive member 31 and spinneret 20. Resin 60 discharged through the nozzle openings of spinning nozzles 21 is thinned by high temperature air, and then passes through the ring of ring-shaped conductive member 31. Therefore, a voltage is applied to the resin fibers moving from the nozzle openings of spinning nozzles 21 to ring-shaped conductive member 31. Thus, the diameter of the fibrous resin thinned by the high temperature air decreases further.

Next, the resin fibers that have passed through the ring of ring-shaped conductive member 31 are irradiated with infrared rays by near-infrared lamp 40. Thus, the fibrous resin is remelted, and the fiber diameter can decrease further.

On the other hand, also in the apparatus shown in Fig. 3, ring-shaped conductive member 31' is disposed between spinneret 20 and porous belt 50. Voltage power supply 30' provides a high potential difference between ring-shaped conductive member 31' and porous belt 50. Resin 60 discharged from the nozzle openings of spinning nozzles 21 is thinned by high temperature air, and then passes through ring-shaped conductive member 31', and is collected on porous belt 50. Therefore, a voltage is applied to the resin fibers moving from ring-shaped conductive member 31' to porous belt 50. Thus, the diameter of the fibrous resin thinned by the high temperature air further decreases.

Further, the resin fibers moving from ring-shaped conductive member 31' to porous belt 50 are also irradiated with heat rays by infrared lamp 40, along with voltage application. By simultaneously performing heat ray irradiation and voltage application, the fiber diameter can be reduced more efficiently.

In addition, also in the apparatus shown in Fig. 4, ring-shaped conductive member 31' is disposed between spinneret 20 and porous belt 50, as in the apparatus shown in Fig. 3. Voltage power supply 30' provides a high potential difference between ring-shaped conductive member 31' and porous belt 50.

Resin 60 discharged through the nozzle openings of spinning nozzle 21 is first irradiated with infrared rays by near-infrared lamp 40. The fibers irradiated with infrared rays are thinned by high temperature air, and then passes through ring-shaped member 31', and is collected on porous belt 50. Therefore, a voltage is applied to the resin fibers moving from ring-shaped member 31' to porous belt 50. Thus, the diameter of the fibrous resin thinned by the high temperature air decreases further, and since the fibers are melted by infrared rays from near-infrared lamp 40, the fiber diameter decreases more effectively.

In the apparatuses shown in Fig. 2 to Fig. 4, the fibers subjected to voltage application and heat ray irradiation are collected on porous belt 50. Porous belt 50 is rotated by rollers. An air collecting section is provided on the back side of the collecting surface of porous belt 50 to make the fiber collection easy. Thus, an ultrathin nonwoven fiber fabric is manufactured on porous belt 50.

In the apparatus shown in Fig. 5, ring-shaped conductive member 31' is disposed between spinneret 20 and porous belt 50, as in the apparatus shown in Fig. 3. Voltage power supply 30' provides a high potential difference between ring-shaped conductive member 31' and porous belt 50.

The apparatus shown in Fig. 5 does not include near-infrared lamp 40, but has temperature maintaining section 70. Temperature maintaining section 70 is a member that limits the dissipation of heat so that the temperature of discharged resin 60 does not decrease. Temperature maintaining section 70 is, for example, a hollow cylinder including a material having low thermal conductivity. Resin 60 discharged through the nozzle openings of spinning nozzles 21 is thinned by high temperature air, and then passes through ring-shaped member 31', and is collected on porous belt 50. Therefore, a voltage is applied to the resin fibers moving from ring-shaped member 31' to porous belt 50. Thus, the diameter of the fibrous resin thinned by the high temperature air decreases further, and since the temperature of the resin is maintained by temperature maintaining section 70, the fiber diameter decreases more effectively.

Examples

The present invention will now be more specifically described based on Examples, which however shall not be construed as limiting the scope of the present invention.

The physical property values and the like in Examples and Comparative Examples were measured by the following methods.

(1) Average Fiber Diameter ($\mu$m) of Fibers of Nonwoven Fiber Fabric

A photograph of a nonwoven fiber fabric at a magnification of 1,000x was taken using an electron microscope (S-3500N manufactured by Hitachi, Ltd.). Any 100 fibers were chosen among from fibers constituting the nonwoven fiber fabric, and the width (diameter) of the chosen fibers was measured. The average of the measurements was taken as the average fiber diameter.

(2) Maximum Pore Diameter ($\mu$m), Minimum Pore Diameter ($\mu$m), and Average Pore Diameter ($\mu$m) of Nonwoven Fiber Fabric

In a constant temperature room having a temperature of 20 $\pm$ 2°C and a humidity of 65 $\pm$ 2% defined in JIS Z8703 (Standard Atmospheric Conditions for Testing), a test piece taken from an obtained ultrathin nonwoven fiber fabric was immersed in a fluorine inert liquid (trade name: Fluorinert manufactured by 3M), and, using Capillary Flow Porometer "model: CFP-1200AE" manufactured by Porous materials, Inc, the maximum pore diameter ($\mu$m), the minimum pore diameter ($\mu$m), and the average pore diameter ($\mu$m) were measured (they are shown as "maximum pore diameter," "minimum pore diameter," and "average pore diameter" in the tables).

(3) Basis Weight (g/m$^2$)

Three samples, each measuring 50 cm in length and 50 cm in width, were collected and the weight of each sample was measured. The average value of the obtained values was converted to weight per unit area, and rounded to the nearest whole number

(4) Void Ratio (%)

At a random position of the resultant nonwoven fiber fabric, thickness was measured at 0.7 kPa for 10 seconds according to JIS 1096 using a thickness meter. From the result, basis weight, and the density of the raw material used for the nonwoven fabric, a numerical value was obtained by the following calculation formula, and rounded to the nearest whole number to obtain the void ratio. However, when the fabricated nonwoven fabric was a laminate (Examples 1, 2, 5, and Comparative Examples 1 to 5), a void ratio of a single-layer nonwoven fabric obtained by removing the spunbonded nonwoven fabric was measured.

$$\mathrm{Void\ ratio\ (\%)} = [1 - (\mathrm{basis\ weight/thickness/density})] \times 100$$

(5) Solvent Component

In known gas chromatography (head space method) described in JIS K0114: 2000, a test piece taken from the nonwoven fiber fabric was placed in a sample bottle, and heated to 160°C. The gas in the sample bottle was analyzed for the measurement of the amount of volatilized DMF.

(6) Collection Performance (%), Pressure Loss (Pa), and QF Value ($\mathrm{Pa}^{-1}$)

The dust collection performance was measured by the following method. Three 15 cm $\times$ 15 cm samples were taken from any portions of a nonwoven fiber fabric (laminate), and for each sample, the collection performance was measured by a collection performance measuring apparatus (Model 8130 manufactured by Tokyo Dylec Corp.). In the measurement of collection efficiency, NaCl particle dust having a count median diameter of 0.07 $\mu$m was generated by an atomizer, and then, the sample was set in a holder, the amount of air was adjusted by a flow rate adjusting valve so that the filter passing speed of the air was 5.3 cm/sec, and the dust concentration was made constant in the range of 15 to 20 mg/$\mathrm{m}^3$. The number D2 of dust particles in upstream to the sample, and the number D1 of dust particles in downstream from the sample were detected by a laser particle detector, and a numerical value was obtained by the following calculation formula, and rounded to one decimal place to obtain collection efficiency (%).

$$\mathrm{Collection\ efficiency\ (\%)} = [1 - (\mathrm{D1/D2})] \times 100$$

where D1 is the number of downstream dust particles, and D2 is the number of upstream dust particles.
In addition, the pressure loss (Pa) was calculated by reading the static pressure difference between upstream and downstream of each sample during the above collection performance measurement by a pressure gauge, and the average value of the samples was rounded to the nearest whole number. Further, the QF value was calculated by the following formula using the values of collection performance and pressure loss obtained by the above methods, and rounded to two decimal places. QF value ($\mathrm{Pa}^{-1}$) = -[1n(1 - [collection performance (%)]/100)]/[pressure loss (Pa)]
A nonwoven fiber fabric was fabricated using the manufacturing apparatus shown in Fig. 4. A propylene homopolymer (MFR: 1500 g/10 min) was fed to the die, and discharged from the die set at a temperature of 300°C at a discharge rate per single nozzle hole of 0.03 g/min, together with heated air (230°C, 120 m/sec) blown from both sides of the nozzles. The diameter of the nozzles of the die was 0.2 mm.
The near-infrared lamp having a focal length of 30 mm was focused on a position at a distance from the gas nozzle surface (see d1 in Fig. 4) of 5 mm, and irradiation was performed at an intensity of 12 V. Further, the application ring was placed at a position at a distance from the gas nozzle surface (see d2 in Fig. 4) of 10 mm, and a voltage of 20 kV was applied. The distance from the surface of the gas nozzle to the collector (see d3 in Fig. 4) was 100 mm. The diameter of the molten resin at a position at a distance from the gas nozzle surface (d2 in Fig. 4) of 10 mm (the position where the application ring was disposed) was 0.6 $\mu$m.
The spun resin fibers were blown on a spunbonded nonwoven fabric (basis weight: g/$\mathrm{m}^2$, average fiber diameter: 18 $\mu$m) placed on the collector to produce a nonwoven fabric laminate in which a nonwoven fiber fabric having a basis weight of 2 g/$\mathrm{m}^2$ and an average fiber diameter of 0.3 $\mu$m was laminated on the spunbonded nonwoven fabric.

The physical properties of the obtained nonwoven fabric laminate were measured by the methods described above. The results are shown in Table 1.

[Example 2]

Spinning was performed by the same method as in Example 1 except that the distance of the application ring from the gas nozzle surface (d2 in Fig. 4) was 20 mm, to obtain a nonwoven fabric laminate in which a nonwoven fiber fabric having a basis weight of 2 g/m$^2$ and an average fiber diameter of 0.5 $\mu$m was laminated on a spunbonded nonwoven fabric. The diameter of the molten resin at a position at a distance from the gas nozzle surface (d2 in Fig. 4) of 20 mm (the position where the application ring was disposed) was 0.8 $\mu$m. The physical properties of the obtained nonwoven fabric laminate were measured by the methods described above. The results are shown in Table 1.

[Example 3]

Spinning was performed by the same method as in Example 1 except that lamination on a spunbonded nonwoven fabric was not performed, to produce a nonwoven fiber fabric (single layer) having a basis weight of 10 g/m$^2$ and an average fiber diameter of 0.3 $\mu$m. The physical properties of the obtained nonwoven fiber fabric were measured by the methods described above. The results are shown in Table 1.

[Example 4]

Spinning was performed by the same method as in Example 2 except that lamination on a spunbonded nonwoven fabric was not performed, to produce a nonwoven fiber fabric (single layer) having a basis weight of 10 g/m$^2$ and an average fiber diameter of 0.3 $\mu$m. The physical properties of the obtained nonwoven fiber fabric were measured by the methods described above. The results are shown in Table 1.

[Example 5]

Spinning was performed by the same method as in Example 1 except that infrared irradiation by the near-infrared lamp was not performed, to produce a nonwoven fabric laminate in which a nonwoven fabric having a basis weight of 2 g/m$^2$ and an average fiber diameter of 0.6 $\mu$m was laminated on a spunbonded nonwoven fabric. The diameter of the molten resin at a position at a distance from the gas nozzle surface (d2 in Fig. 4) of 10 mm (the position where the application ring was disposed) was 0.9 $\mu$m. The physical properties of the obtained nonwoven fabric laminate were measured by the methods described above. The results are shown in Table 1.

Table 1

| | | | Example 1 | Example 2 | Example 3 | Example 4 | Example 5 |
|---|---|---|---|---|---|---|---|
| Manufacturing conditions | Amount of discharge (mg/min) | | 30 | 30 | 30 | 30 | 30 |
| | Voltage application | Position (mm) | 10 | 20 | 20 | 20 | 10 |
| | | Intensity (kv) | 20 | 20 | 20 | 20 | 20 |
| | Near infrared ray irradiation | Position (mm) | 5 | 5 | 5 | 5 | No irradiation |
| | | Intensity (V) | 12 | 12 | 12 | 12 | |
| Nonwoven fabric structure | | | Lamination | Lamination | Single layer | Single layer | Lamination |
| Basis weight (g/m$^2$) | | | 17 | 17 | 1.0 | 17 | 17 |
| Void ratio (%) | | | 92 | 90 | 92 | 91 | 90 |
| Average fiber diameter ($\mu$m) | | | 0.3 | 0.5 | 0.3 | 0.5 | 0.6 |

(continued)

| | | Example 1 | Example 2 | Example 3 | Example 4 | Example 5 |
|---|---|---|---|---|---|---|
| Pore diameter | Average ($\mu$m) | 6.8 | 8.2 | 0.3 | 0.6 | 9.2 |
| | Maximum ($\mu$m) | 40.1 | 55.3 | 0.4 | 0.8 | 60.0 |
| | Minimum ($\mu$m) | 7.0 | 10.6 | 0.3 | 0.6 | 10.8 |
| Solvent component | | No | No | No | No | No |
| Filter performance | Pressure loss (Pa) | 22 | 18 | 126 | 110 | 16 |
| | Collection efficiency (%) | 64.3 | 55.2 | 100.0 | 99.9 | 42.0 |
| | QF value (Pa$^{-1}$) | 0.47 | 0.44 | 0.49 | 0.63 | 0.34 |

Average fiber diameter: the average fiber diameter of the fibers of the nonwoven fabric manufactured by the method of the present invention, in the laminate.

Basis weight, pore diameter, and filter performance: the values of the laminate.

The average fiber diameters of the fibers of the nonwoven fiber fabrics obtained in Examples 1 to 5 were all 0.6 $\mu$m or less, demonstrating that the fibers were sufficiently thinned. However, in Example 5 in which near-infrared ray irradiation was not performed, the fiber diameter was slightly larger than that of Example 1 in which near-infrared ray irradiation was performed.

In addition, as seen from Example 3 and Example 4, the average pore diameters of the manufactured nonwoven fiber fabrics were also 0.3 $\mu$m and 0.6 $\mu$m, which were sufficiently small. In addition, the nonwoven fiber fabrics obtained in Examples 1 to 5 using the molten polymer as the spinning raw material, and therefore, included no solvent component. Further, the fibers of the nonwoven fiber fabrics obtained in Examples 1 to 5 had entanglement points at which the fibers were self-fused to each other, as shown in the photograph of Fig. 1.

[Comparative Example 1]

Spinning was performed by the same method as in Example 1 except that infrared irradiation by the near-infrared lamp and voltage application were not performed, to obtain a nonwoven fabric laminate in which a nonwoven fabric having a basis weight of 2 g/m$^2$ and an average fiber diameter of 0.8 $\mu$m was laminated on a spunbonded nonwoven fabric. The method of Comparative Example 1 corresponds to spinning by conventional melt blowing. The physical properties of the obtained nonwoven fabric laminate were measured by the methods described above. The results are shown in Table 2.

[Comparative Example 2]

Spinning was performed by the same method as in Example 1 except that infrared irradiation by the near-infrared lamp was not performed, and heated air was not jet, to obtain a nonwoven fabric laminate in which a nonwoven fabric having a basis weight of 2 g/m$^2$ and an average fiber diameter of 10 $\mu$m was laminated on a spunbonded nonwoven fabric. The method of Comparative Example 2 corresponds to spinning by a conventional electrospinning method. The obtained nonwoven fabric had a large fiber diameter (average fiber diameter: 10.0 $\mu$m). The physical properties (pore diameter and filter performance) were measured by the methods described above, and were equal to or less than the measurement lower limit values. The results are shown in Table 2.

[Comparative Example 3]

Spinning was performed by the same method as in Comparative Example 2 except that the discharge rate was 0.001 g/min, to obtain a nonwoven fabric laminate in which a nonwoven fabric having a basis weight of 2 g/m$^2$ and an average fiber diameter of 1.5 $\mu$m was laminated on a spunbonded nonwoven fabric. The physical properties of the obtained nonwoven fabric laminate were measured by the methods described above. The results are shown in Table 2.

[Comparative Example 4]

A nonwoven fiber fabric was fabricated using a manufacturing apparatus in which voltage application was performed on a die (see Japanese Patent Application No. 2005-520068), instead of performing voltage application by the application ring. A propylene homopolymer (MFR: 1500 g/10 min) was fed to the die, and discharged from the die set at a temperature of 300°C at a discharge rate per single nozzle hole of 0.03 g/min, together with heated air (230°C, 120 m/sec) blown from both sides of the nozzles. The diameter of the nozzles of the die was 0.2 mm, and the diameter of the molten resin immediately after discharged through the nozzles of the die was substantially the same as the nozzle diameter.

Fibers were spun with a distance from the nozzle surface to the collector of 100 mm and an applied voltage of 20 kV, and blown on a spunbonded nonwoven fabric (basis weight: 15 g/m$^2$, average fiber diameter: 18 $\mu$m) placed on the collector to obtain a nonwoven fabric laminate in which a nonwoven fabric having a basis weight of 2 g/m$^2$ and an average fiber diameter of 1.0 $\mu$m was laminated on the spunbonded nonwoven fabric. The physical properties of the obtained nonwoven fabric laminate were measured by the methods described above. The results are shown in Table 2.

[Comparative Example 5]

A nonwoven fiber fabric was fabricated using a publicly known electrospinning apparatus. A propylene homopolymer (MFR: 1500 g/10 min) was dissolved at a concentration of 10 weight % in DMF in a syringe set at a temperature of 250°C.

The solution was discharged at a discharge rate per nozzle of 0.01 g/min, and fibers were spun under the conditions of the distance from the nozzle surface to the collector): 100 mm and applied voltage: 20 kV, and blown on a spunbonded nonwoven fabric (basis weight: 15 g/m$^2$, average fiber diameter: 18 $\mu$m) placed on the collector. A nonwoven fabric laminate in which a nonwoven fabric having a basis weight of 2 g/m$^2$ and an average fiber diameter of 0.5 $\mu$m was laminated on the spunbonded nonwoven fabric was obtained. The physical properties of the obtained nonwoven fabric laminate were measured by the methods described above. The results are shown in Table 2.

Table 2

| | | | Comp. Ex. 1 | Comp. Ex. 2 | Comp. Ex. 3 | Comp. Ex. 4 | Comp. Ex. 5 |
|---|---|---|---|---|---|---|---|
| Manufacturing conditions | Amount of discharge (mg/min) | | 30 | 30 | 1 | 30 | 10 (Solution) |
| | Voltage application | Position (mm) | No application | 10 | 10 | 0*1 | 0*1 |
| | | Intensity (kv) | | 20 | 20 | 20 | 20 |
| | Near-infrare d ray irradiation | Position (mm) | No irradiation | No irradiation | No irradiation | No irradiation | No irradiation |
| | | Intensity (V) | | | | | |
| Nonwoven fabric structure | | | Lamination | Lamination | Lamination | Lamination | Lamination |
| Basis weight (g/m$^2$) | | | 17 | 17 | 17 | 17 | 17 |
| Void ratio (%) | | | 91 | 89 | 90 | 90 | 91 |
| Average fiber diameter ($\mu$m) | | | 0.8 | 10.0 | 1.5 | 1.0 | 0.5 |
| Pore diameter ($\mu$m) | Average ($\mu$m) | | 12.2 | - | 14.3 | 18.4 | 10.4 |
| | Maximum ($\mu$m) | | 60.1 | | 60.3 | 60.6 | 57.3 |
| | Minimum ($\mu$m) | | 15.2 | | 21.5 | 18.0 | 10.0 |
| Solvent component | | | No | No | No | No | Yes |
| Filter performance | Pressure loss (Pa) | | 16 | - | 9 | 10 | 18 |
| | Collection efficiency (%) | | 32.4 | | 17.2 | 19.5 | 50.3 |
| | QF value (Pa$^{-1}$) | | 0.24 | | 0.21 | 0.20 | 0.39 |

Average fiber diameter: the average fiber diameter of the fibers of the nonwoven fabric manufactured by the method of the present invention, in the laminate.
Basis weight, pore diameter, and filter performance: the values of the laminate.
*1: Voltage was directly applied to the die without using an application ring.

In Comparative Example 1, voltage application was not performed, and therefore, only thinning by melt blowing was performed, and the fiber diameter was 0.8 μm; therefore sufficiently thinned fibers were not obtained. In Comparative Example 2, heated air was not jetted, and therefore, only thinning by an electric field was performed, and extremely thick (10 μm) fibers were obtained. Even when the discharge rate of the resin was reduced as in Comparative Example 3, the extent of thinning was insufficient (1.5 μm).

In Comparative Example 4, voltage application was performed before the fibrous resin was sufficiently thinned, and therefore, the obtained fibers were not sufficiently thinned (1.0 μm). In addition, in Comparative Example 5, the polymer solution was used, and therefore, the diameter of the obtained fibers was small (0.5 μm), but a large amount of the solvent component remained.

Industrial Applicability

According to the present invention, a nonwoven fiber fabric having a small fiber diameter can be efficiently produced using a molten resin as a spinning raw material. The nonwoven fiber fabric of the present invention is particularly preferably used as a filter.

Reference Signs List

| | |
|---|---|
| 10 | extruder |
| 11 | hopper |
| 12 | compression section |
| 20 | spinneret |
| 21 | spinning nozzle |
| 22 | air heating apparatus |
| 23 | air nozzle (gas nozzle) |
| 30 | voltage power supply |
| 31 | ring-shaped conductive member |
| 40 | near-infrared lamp |
| 50 | porous belt (collector) |
| 51 | air collecting section |
| 52 | blower |
| 60 | discharged resin |
| 70 | temperature maintaining section |

**Claims**

1. A nonwoven fiber fabric comprising thermoplastic resin fibers, wherein
   the fibers have an average fiber diameter in the range of 0.01 to 0.5 μm, and
   the nonwoven fiber fabric has an average pore diameter in the range of 0.01 to 10.0 μm and is free from any solvent component.

2. The nonwoven fiber fabric according to claim 1, wherein the fibers are melt-spun by melt blowing.

3. The nonwoven fiber fabric according to claim 1 or 2, wherein the nonwoven fiber fabric has entanglement points at which the fibers of the nonwoven fiber fabric are self-fused to each other.

4. The nonwoven fiber fabric according to any one of claims 1 to 3, wherein the nonwoven fiber fabric has a void ratio of 40% or more.

5. The nonwoven fiber fabric according to any one of claims 1 to 3, wherein the thermoplastic resin is an olefin thermoplastic resin.

6. The nonwoven fiber fabric according to claim 5, wherein the olefin thermoplastic resin is a propylene polymer.

7. A laminate comprising one or more layers that comprise the nonwoven fiber fabric according to any one of claims 1 to 3.

8. The laminate according to claim 7, further comprising spunbonded nonwoven fabrics laminated on both sides of the layer comprising the nonwoven fiber fabric.

9. A filter comprising the laminate according to claim 7.

10. An air filter comprising the laminate according to claim 7.

11. A foam molding reinforcement comprising the laminate according to claim 7 or 8.

12. A method for manufacturing a nonwoven fiber fabric, comprising:

   discharging a molten thermoplastic resin from a spinneret together with a heated gas by melt blowing, to provide a fibrous resin having a diameter of 1.0 $\mu$m or less;
   applying a high voltage to the fibrous resin after the discharging and providing; and
   collecting the fibrous resin to which the high voltage has been applied, in the form of a web.

13. The method for manufacturing a nonwoven fiber fabric according to claim 12, wherein fibers of the nonwoven fiber fabric have an average fiber diameter in the range of 0.01 to 0.5 $\mu$m.

14. The method for manufacturing a nonwoven fiber fabric according to claim 12, further comprising irradiating the fibrous resin discharged from the spinneret with heat rays before or simultaneously with the step of applying a high voltage.

15. The method for manufacturing a nonwoven fiber fabric according to claim 14, wherein the heat rays are near-infrared rays.

16. The method for manufacturing a nonwoven fiber fabric according to claim 12, wherein the thermoplastic resin is an olefin thermoplastic resin.

17. The method for manufacturing a nonwoven fiber fabric according to claim 12, wherein
   the heated gas is discharged from a gas nozzle,
   the fibrous resin is collected on a collector, and
   applying the high voltage is a step of providing a potential difference between the collector and a conductive member placed between the gas nozzle and the collector.

18. An apparatus for manufacturing a nonwoven fiber fabric, comprising:

   an extruder that melts and carries a thermoplastic resin;
   a spinneret that discharges the molten resin carried from the extruder, in the form of fibers;
   a gas nozzle that jets a high temperature gas to a lower part of the spinneret;
   a voltage application section that applies a high voltage to the fibrous resin discharged from the spinneret; and
   a collector section that collects the fibrous resin in the form of a web, wherein
   the voltage application section applies a high voltage to the fibrous resin after the fibrous resin discharged from the spinneret becomes 1.0 $\mu$m or less.

19. The apparatus for manufacturing a nonwoven fiber fabric according to claim 18, wherein
   the voltage application section comprises a conductive member placed between the gas nozzle and the collector section that collects the fibrous resin in the form of the web.

20. The apparatus for manufacturing the nonwoven fiber fabric according to claim 19, wherein the voltage application section provides a potential difference between the conductive member and the section that collects the fibrous resin in the form of a web, to apply a high voltage to the fibrous resin.

21. The apparatus for manufacturing a nonwoven fiber fabric according to claim 19 or 20, wherein the conductive member is placed between the gas nozzle and the section that collects the fibrous resin in the form of a web, and at a position 10 mm or more away from a surface of the gas nozzle.

22. The apparatus for manufacturing a nonwoven fiber fabric according to claim 19 or 20, wherein the conductive member is placed between the gas nozzle and the section that collects the fibrous resin in the form of a web, and at a position 10 to 20 mm from a surface of the gas nozzle.

23. The apparatus for manufacturing a nonwoven fiber fabric according to any one of claims 18 to 22, further comprising a heat ray irradiation section that irradiates the fibrous resin discharged from the spinneret with heat rays.

**Patentansprüche**

1. Faser-Vliesmaterial, das Fasern aus thermoplastischem Harz umfasst, worin
die Fasern einen mittleren Faserdurchmesser im Bereich von 0,01 bis 0,5 $\mu$m aufweisen und
das Faser-Vliesmaterial einen mittleren Porendurchmesser im Bereich von 0,01 bis 10,0 $\mu$m aufweist und frei von irgendwelchen Lösungsmittelkomponenten ist.

2. Faser-Vliesmaterial gemäß Anspruch 1, worin die Fasern durch Schmelzblasen schmelzversponnen sind.

3. Faser-Vliesmaterial gemäß Anspruch 1 oder 2, worin das Faser-Vliesmaterial Verwicklungspunkte aufweist, an denen die Fasern des Faser-Vliesmaterials miteinander selbst-verschmolzen sind.

4. Faser-Vliesmaterial gemäß irgendeinem der Ansprüche 1 bis 3, worin das Faser-Vliesmaterial ein Leerraumverhältnis von 40 % oder mehr aufweist.

5. Faser-Vliesmaterial gemäß irgendeinem der Ansprüche 1 bis 3, worin das thermoplastische Harz ein thermoplastisches Olefinharz ist.

6. Faser-Vliesmaterial gemäß Anspruch 5, worin das thermoplastische Olefinharz ein Propylenpolymer ist.

7. Laminat, das eine oder mehrere Schichten umfasst, die das Faser-Vliesmaterial gemäß irgendeinem der Ansprüche 1 bis 3 umfassen.

8. Laminat gemäß Anspruch 7, das weiterhin Spinnvliesmaterialien umfasst, die auf beiden Seiten der Schicht, die das Faser-Vliesmaterial umfasst, laminiert sind.

9. Filter, der das Laminat gemäß Anspruch 7 umfasst.

10. Luftfilter, der das Laminat gemäß Anspruch 7 umfasst.

11. Schaumformungsverstärkung, die das Laminat gemäß Anspruch 7 oder 8 umfasst.

12. Verfahren zur Herstellung eines Faser-Vliesmaterials, umfassend:

    Freisetzen eines geschmolzenen thermoplastischen Harzes aus einer Spinndüse zusammen mit erwärmtem Gas durch Schmelzblasen, um ein faserförmiges Harz mit einem Durchmesser von 1,0 $\mu$m oder weniger be-reitzustellen;
    Anwenden von Hochspannung auf das faserförmige Harz nach dem Freisetzen und Bereitstellen; und
    Einsammeln des faserförmigen Harzes, auf das die Hochspannung angewendet wurde, in Form eines Netzes.

13. Verfahren zur Herstellung eines Faser-Vliesmaterials gemäß Anspruch 12, worin die Fasern des Faser-Vliesmaterials eine mittleren Faserdurchmesser im Bereich von 0,01 bis 0,5 $\mu$m aufweisen.

14. Verfahren zur Herstellung eines Faser-Vliesmaterials gemäß Anspruch 12, das weiterhin die Bestrahlung des faserförmigen Harzes, das aus der Spinndüse freigesetzt wurde, mit Wärmestrahlen vor oder gleichzeitig mit dem Schritt der Anwendung der Hochspannung umfasst.

15. Verfahren zur Herstellung eines Faser-Vliesmaterials gemäß Anspruch 14, worin die Wärmestrahlen Nah-Infrarotstrahlen sind.

16. Verfahren zur Herstellung eines Faser-Vliesmaterials gemäß Anspruch 12, worin das thermoplastische Harz ein thermoplastisches Olefinharz ist.

17. Verfahren zur Herstellung eines Faser-Vliesmaterials gemäß Anspruch 12, worin
das erwärmte Gas aus einer Gasdüse freigesetzt wird,
das faserförmige Harz auf einem Kollektor gesammelt wird und
die Anwendung der Hochspannung ein Schritt ist, in dem eine Potentialdifferenz zwischen dem Kollektor und einem leitfähigen Element, das zwischen der Gasdüse und dem Kollektor platziert ist, bereitgestellt wird.

18. Vorrichtung zur Herstellung eines Faser-Vliesmaterials, umfassend:

einen Extruder, der ein thermoplastisches Harz schmilzt und transportiert;
eine Spinndüse, die das vom Extruder transportierte geschmolzene Harz in Form von Fasern freisetzt;
eine Gasdüse, die ein Hochtemperaturgas zu einem unteren Teil der Spinndüse hin ausstößt;
einen Spannungsausübungsabschnitt, der Hochspannung auf das von der Spinndüse freigesetzte faserförmige Harz ausübt; und
einen Kollektorabschnitt, der das faserförmige Harz in Form eines Netzes einsammelt, worin
der Spannungsausübungsabschnitt eine Hochspannung auf das faserförmige Harz ausübt, nachdem das aus der Spinndüse freigesetzte faserförmige Harz 1,0 μm oder
weniger geworden ist.

19. Vorrichtung zur Herstellung eines Faser-Vliesmaterials gemäß Anspruch 18, worin der Spannungsausübungsabschnitt ein leitfähige Element umfasst, das zwischen der Gasdüse und dem Kollektorabschnitt, der das faserförmige Harz in Form des Netzes einsammelt, platziert ist.

20. Vorrichtung zur Herstellung eines Faser-Vliesmaterials gemäß Anspruch 19, worin der Spannungsausübungsabschnitt eine Potentialdifferenz zwischen dem leitfähige Element und dem Abschnitt, der das faserförmige Harz in Form eines Netzes einsammelt, bereitstellt, um eine Hochspannung auf das faserförmige Harz auszuüben.

21. Vorrichtung zur Herstellung eines Faser-Vliesmaterials gemäß Anspruch 19 oder 20, worin das leitfähige Element zwischen der Gasdüse und dem Abschnitt platziert ist, der das faserförmige Harz in Form eines Netzes einsammelt, und an einer Position, die 10 mm oder weiter von der Oberfläche der Gasdüse entfernt ist.

22. Vorrichtung zur Herstellung eines Faser-Vliesmaterials gemäß Anspruch 19 oder 20, worin das leitfähige Element zwischen der Gasdüse und dem Abschnitt plaziert ist, der das faserförmige Harz in Form eines Netzes einsammelt, und an einer Position, die 10 bis 20 mm von der Oberfläche der Gasdüse entfernt ist.

23. Vorrichtung zur Herstellung eines Faser-Vliesmaterials gemäß irgendeinem der Ansprüche 18 bis 22, die weiterhin einen Wärmestrahl-Bestrahlungsabschnitt umfasst, der das aus der Spinndüse freigesetzte faserförmige Harz mit Wärmebestrahlen bestrahlt.

**Revendications**

1. Tissu non tissé en fibres comprenant des fibres de résine thermoplastique, dans lequel
les fibres ont un diamètre moyen de fibres se trouvant dans la plage allant de 0,01 à 0,5 μm, et
le tissu non tissé en fibres a un diamètre moyen de pores se trouvant dans la plage allant de 0,01 à 10,0 μm et est exempt de tout composant solvant.

2. Tissu non tissé en fibres selon la revendication 1, dans lequel les fibres sont filées par fusion par fusion-soufflage.

3. Tissu non tissé en fibres selon la revendication 1 ou 2, dans lequel le tissu non tissé en fibres a des points d'entremêlement auxquels les fibres du tissu non tissé en fibres sont auto-fusionnées les unes aux autres.

4. Tissu non-tissé en fibres selon l'une quelconque des revendications 1 à 3, dans lequel le tissu non tissé en fibres a un indice de vide de 40% ou plus.

5. Tissu non-tissé en fibres selon l'une quelconque des revendications 1 à 3, dans lequel la résine thermoplastique est une résine thermoplastique d'oléfine.

**6.** Tissu non-tissé en fibres selon la revendication 5, dans lequel la résine thermoplastique d'oléfine est un polymère de propylène.

**7.** Stratifié comprenant une ou plusieurs couche(s) qui comprend/comprennent le tissu non-tissé en fibres selon l'une quelconque des revendications 1 à 3.

**8.** Stratifié selon la revendication 7, comprenant en outre des tissus non-tissés filés-liés stratifiés sur les deux côtés de la couche comprenant le tissu non-tissé en fibres.

**9.** Filtre comprenant le stratifié selon la revendication 7.

**10.** Filtre à air comprenant le stratifié selon la revendication 7.

**11.** Renfort de moulage de mousse comprenant le stratifié selon la revendication 7 ou 8.

**12.** Procédé de fabrication d'un tissu non tissé en fibres, comprenant le fait :

de décharger une résine thermoplastique fondue d'une filière conjointement avec un gaz chauffé par fusion-soufflage, pour fournir une résine fibreuse ayant un diamètre inférieur ou égal à 1,0 $\mu$m ;
d'appliquer une tension élevée à la résine fibreuse après la décharge et la fourniture ; et
de collecter la résine fibreuse à laquelle la tension élevée a été appliquée, sous la forme d'une bande.

**13.** Procédé de fabrication d'un tissu non tissé en fibres selon la revendication 12, dans lequel les fibres du tissu non-tissé en fibres ont un diamètre moyen de fibres se trouvant dans la plage allant de 0,01 à 0,5 $\mu$m.

**14.** Procédé de fabrication d'un tissu non tissé en fibres selon la revendication 12, comprenant en outre l'irradiation de la résine fibreuse déchargée de la filière avec des rayons thermiques avant ou simultanément avec l'étape d'application d'une tension élevée.

**15.** Procédé de fabrication d'un tissu non tissé en fibres selon la revendication 14, dans lequel les rayons thermiques sont des rayons infrarouges proches.

**16.** Procédé de fabrication d'un tissu non tissé en fibres selon la revendication 12, dans lequel la résine thermoplastique est une résine thermoplastique d'oléfine.

**17.** Procédé de fabrication d'un tissu non tissé en fibres selon la revendication 12, dans lequel
le gaz chauffé est déchargé d'une buse à gaz,
la résine fibreuse est collectée sur un collecteur, et
l'application de la tension élevée est une étape consistant à fournir une différence de potentiel entre le collecteur et un élément conducteur placé entre la buse à gaz et le collecteur.

**18.** Appareil de fabrication d'un tissu non tissé en fibres, comprenant :

une extrudeuse qui fait fondre et transporte une résine thermoplastique ;
une filière qui décharge la résine fondue transportée à partir de l'extrudeuse, sous la forme de fibres,
une buse à gaz qui éjecte un gaz à haute température vers une partie inférieure de la filière ;
une section d'application de tension qui applique une tension élevée à la résine fibreuse déchargée de la filière ; et
une section de collecteur qui collecte la résine fibreuse sous la forme d'une bande, où
la section d'application de tension applique une tension élevée à la résine fibreuse après que la résine fibreuse déchargée de la filière devient de 1,0 $\mu$m ou moins.

**19.** Appareil de fabrication d'un tissu non tissé en fibres selon la revendication 18, dans lequel
la section d'application de tension comprend un élément conducteur placé entre la buse à gaz et la section de collecteur qui collecte la résine fibreuse sous la forme de la bande.

**20.** Appareil de fabrication du tissu non tissé en fibres selon la revendication 19, dans lequel la section d'application de tension fournit une différence de potentiel entre l'élément conducteur et la section qui collecte la résine fibreuse sous la forme d'une bande, pour appliquer une tension élevée à la résine fibreuse.

**21.** Appareil de fabrication d'un tissu non tissé en fibres selon la revendication 19 ou 20, dans lequel l'élément conducteur est placé entre la buse à gaz et la section qui collecte la résine fibreuse sous la forme d'une bande, et à une position éloignée de 10 mm ou plus d'une surface de la buse à gaz.

**22.** Appareil de fabrication d'un tissu non tissé en fibres selon la revendication 19 ou 20, dans lequel l'élément conducteur est placé entre la buse à gaz et la section qui collecte la résine fibreuse sous la forme d'une bande, et à une position de 10 à 20 mm d'une surface de la buse à gaz.

**23.** Appareil de fabrication d'un tissu non tissé en fibres selon l'une quelconque des revendications 18 à 22, comprenant en outre une section d'irradiation avec des rayons thermiques qui irradie la résine fibreuse déchargée de la filière avec des rayons thermiques.

FIG.1

FIG.2

FIG.3

FIG.4

FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010027063 A1
- WO 2007022389 A1
- WO 2011100743 A2
- JP 2005520068 PCT
- JP 2002201559 A
- JP 8273654 A
- JP 2007262644 A
- JP 2005520068 A